# EUROPÄISCHE PATENTSCHRIFT

(11) **EP 1 932 640 B1**
(45) Veröffentlichungstag und Bekanntmachung des Hinweises auf die Patenterteilung: **13.01.2010**
(21) Anmeldenummer: 07018401.5
(22) Anmeldetag: 19.09.2007
(51) Int. Cl.: B27G 17/00, B23D 71/06, B24D 15/02

(54) **Spanabhebendes Handwerkzeug**
Handheld machining tool
Outil manuel d'enlèvement de copeaux

(30) Priorität: 12.12.2006 DE 102006058537
(43) Veröffentlichungstag der Anmeldung: 18.06.2008
(73) Patentinhaber: Irwin Industrial Tools GmbH, 85399 Hallbergmoos (DE)
(72) Erfinder: Schöppe, Florian, 85748 Garching (DE)
(74) Vertreter: Schmid, Nils T.F.

(56) Entgegenhaltungen:
- US-A- 2 242 545
- US-A- 2 434 356
- US-A- 4 077 165
- US-A- 4 179 779
- US-A1- 2006 246 830
- US-B1- 6 939 089

## Beschreibung

Die Erfindung betrifft ein spanabhebendes Handwerkzeug mit einem zum manuellen Betätigen des Handwerkzeugs greifbaren Träger. Der Träger ist üblicherweise derart dimensioniert, daß er ergonomisch günstig von einer Hand umgriffen werden kann, um genügend Angriffsfläche zum Einleiten der manuellen Betätigungskräfte in das Handwerkzeug bereitzustellen. Das spanabhebende Handwerkzeug umfaßt ein an dem Träger abnehmbar gehaltenes Spanteil, das beispielsweise als Feilblatt oder Hobelplatte ausgeführt sein kann.

Damit den hohen Bearbeitungskräften beim spanabhebenden Behandeln eines Werkstücks widerstanden werden kann, ist es bekannt, das Spanteil an den Träger unter Aufbau einer Zugvorspannung zu befestigen. Es zeigt sich, daß ein vorspannungsfreies Befestigen nur eine unzureichende Halterung des Spanteils zur Folge hat und sich ungünstig auf die Spannungseffektivität des Handwerkzeugs auswirkt. Bei einem herkömmlichen spanabhebenden Handwerkzeug ist ein Mechanismus zum Einspannen des Spanteils an dem Träger mit einem relativ zum Träger beweglichen Schiebers versehen, der mit dem Spanteil in Eingriff bringbar ist.

Um die Zugvorspannungskraft in dem Spanteil zu erzeugen, steht der Schieber mit einer Betätigungsschraube in Eingriff. Bei Betätigung der Schraube verlagert sich der Schieber relativ zum Spanteil und kommt mit letzterem in Eingriff, und bei Weiterdrehung der Schraube werden die gewünschten Zugvorspannungskräfte aufgebaut.

Es zeigte sich in der Praxis, daß derartige spanabhebende Handwerkzeuge mit einem Schraubvorspannmechanismus insbesondere dann einen hohen Bearbeitungsvorbereitungsaufwand aufweisen, wenn das Spanteil für unterschiedliche spanabhebende Bearbeitungsvorgänge ausgetauscht werden soll. Ist beispielsweise ein Werkstück zuerst mit einem groben Feilblatt zu bearbeiten und ein Wechsel für eine spätere Bearbeitung zu einem feinen Feilblatt notwendig, so muß mit mehreren umständlichen Vollumdrehungen der Betätigungsschraube der Schraubspanmechanismus geöffnet werden, um zum einen die Zugvorspannung zu lösen und zum anderen den Schieber vollständig von dem Feilblatt zu befreien, und entsprechend wieder geschlossen werden, was eines erheblichen Zeitaufwands und Betätigungsgeschicks bedarf. Zudem zeigte sich durch die langwierige Löse- und Spannbetätigung, daß bei Unkonzentriertheit eine Verletzungsgefahr für die Bedienperson nicht vernachlässigbar ist.

US 4,077,165, das als Basis für den Oberbegriff des Anspruchs 1 dient, offenbart eine elektrisch betriebene Bandschleifmaschine, bei der ein Spanmechanismus einen schwenkbaren Betätigungsarm, sowie einen schwenkbaren Greifer aufweist.

Aus US 4,179,779 ist ein Schleifwerkzeug bekannt, bei dem das Schleifblatt über ein Federblatt (22) an dem Träger befestigt ist.

US 2006/0246830 A1 offenbart ein Handschleifwerkzeug, bei dem das Schleifpapier über einen Schwenkhebel eingespannt wird, der einen Spannvorsprung aufweist.

Es ist Aufgabe der Erfindung, ein spanabhebendes Handwerkzeug mit einem austauschbaren Spanteil zu bilden, das einfach, sicher und schnell an einem Träger des Handwerkzeugs an- und abnehmbar.

Diese Aufgabe wird durch die Merkmale von Anspruch 1 gelöst. Danach ist das erfindungsgemäße spanabhebende Handwerkzeug mit einem gewindefreien Mechanismus zum Ein- und/oder Vorspannen des Spanteils an einem Träger versehen. Ein Spannungserzeuger des Spannmechanismus hat einen schwenkbaren Betätigungsarm, der bei einer Betätigungsschwenkbewegung von weniger als 360° nicht nur mit dem Spanteil in Eingriff kommt sondern auch das Spanteil mitnimmt, um die gewünschte Zugvorspannung zu erzeugen. Mit der erfindungsgemäßen einfachen Betätigungsschwenkbewegung von weniger als 360° kann mit einem Handstreich das Spanteil von dem Träger entfernt und daran wieder fest angebracht werden. Die erfindungsgemäße Maßnahme läßt sogar eine einhändige Betätigung des spanabhebenden Handwerkzeugs zu. Das Verletzungsrisiko ist deutlich gegenüber den bekannten Handwerkzeugen mit Schraubspannmechanismus gesenkt.

Bei einer bevorzugten Ausführung der Erfindung ist die Betätigungsschwenkbewegung kleiner als 270°, vorzugsweise kleiner als 180°, vorzugsweise kleiner als 90°, vorzugsweise kleiner als 60°, vorzugsweise kleiner als 30°.

Ein bezüglich des Betätigungsarms strukturell eigenständiger, zumindest im Spannzustand mit dem Betätigungsarm verbundener Greifer ist zum Ausrühren einer überwiegend translatorischen, insbesondere rein translatorischen, Greifbewegung von einem Lösezustand in den Vorspannzustand an dem Träger gelagert. Damit ein ausreichend großer translatorischer Verlagerungsweg bei der erfindungsgemäß begrenzten Betätigungsschwenkbewegung des Betätigungsarms zur Verfügung steht, ist vorzugsweise eine Schwenkachse des Betätigungsarms in einem Winkel, vorzugsweise senkrecht, zu der Verlagerungsrichtung des Greifers ausgerichtet, in der letzterer zum Ergreifen des Spanteils verlagert wird und die Zugvorspannungskraft aufbaut.

Bei einer bevorzugten Ausführung der Erfindung ist der Greifer an einem Schwenklagerzapfen des Betätigungsarms gekoppelt. Um die im wesentlichen translatorische Bewegung des Greifers zu realisieren, ist der Schwenklagerzapfen nicht fest an dem Träger angebracht, sondern beweglich, insbesondere translatorisch verschieblich. Um die gewünschte Verlagerung des Greifers für den Vorspanneingriff mit dem Spanteil zu realisieren, kann der Betätigungsarm mit einer Nocke fest verbunden sein. Bei der Betätigungsschwenkbewegung kommt die Nocke derart mit dem Träger in einen widerlagerartigen Eingriff, daß der bewegliche Schwenklagerzapfen vorzugsweise in einem im Träger ausgebildeten Langloch zusammen mit dem Greifer relativ zum Spannteil verlagert wird, um das Spanteil zu greifen und vorzuspannen.

Vorzugsweise sind der Betätigungsarm und die Nocke an der Außenseite des Trägers angeordnet. An der Außenseite des Trägers kann ein Durchgang ausgebildet sein, durch den sich der Greifer hindurch erstreckt und verlagert werden kann.

Vorzugsweise sind zumindest annähernd der gesamte Betätigungsarm und die Anlagenstelle an einer Außenseite des Trägers angeordnet. An der Außenseite kann insbesondere ein Durchgang vorgesehen sein, durch den sich der Greifer, insbesondere dessen Verbindungsstrebe, hindurch erstreckt.

Bei einer weiteren bevorzugten Ausführung der Erfindung ist der Greifer von dem Betätigungsarms in einem Lösezustand entkoppelt. Erst bei der Betätigungsschwenkbewegung des Betätigungsarms in den Spannzustand kommt der Betätigungsarm in einen Kontakteingriff mit dem Greifer, um letzteren für einen Eingriff mit dem Spanteil und für dessen Vorspannung zu verdrängen.

Der Träger kann beispielsweise eine Basis aufweisen, die ein von dem gewindefreien Vorspannmechanismus fernes Ende des Spanteils hält, wobei der Betätigungsarm durch ein Trägerteil gebildet ist, das an der Basis angelenkt ist.

Vorzugsweise hat der Greifer eine gekrümmte Außenfläche, welche eine Verdrängbewegung des Greifers bei Kontakteingriff des Trägerteils definiert. Außerdem kann das Trägerteil eine Eingriffszunge aufweisen, deren Position relativ zu einer Schwenkachse des Trägerteils derart festgelegt ist, daß bei der Betätigungsschwenkbewegung in den Spannzustand die Eingriffzunge den Greifer berührt und diesen in dessen Spannzustand verlagert, so daß er mit dem Spanteil in Eingriff kommt und letzteres vorgespannt wird. Vorzugsweise ist die Eingriffszunge auf deren dem Greifer zugewandten Seite angeschrägt.

Bei einer bevorzugten Weiterbildung der Erfindung hat das Trägerteil eine Arretiereinrichtung, die das Trägerteil in dessen Spannzustand an der Basis festhält.

Bei einer bevorzugten Weiterbildung der Ausführungen der Erfindung ist der Greifer mit einem Mitnehmerhaken versehen, der mit einem dazu insbesondere formkomplementären Gegenhaken am Spanteil in einem lösbaren, mitnehmenden Eingriff bringbar ist.

Weitere Vorteile, Eigenschaften und Merkmale der Erfindung werden durch die folgende Beschreibung bevorzugter Ausführungen anhand der beiliegenden Zeichnungen deutlich, in denen zeigen:

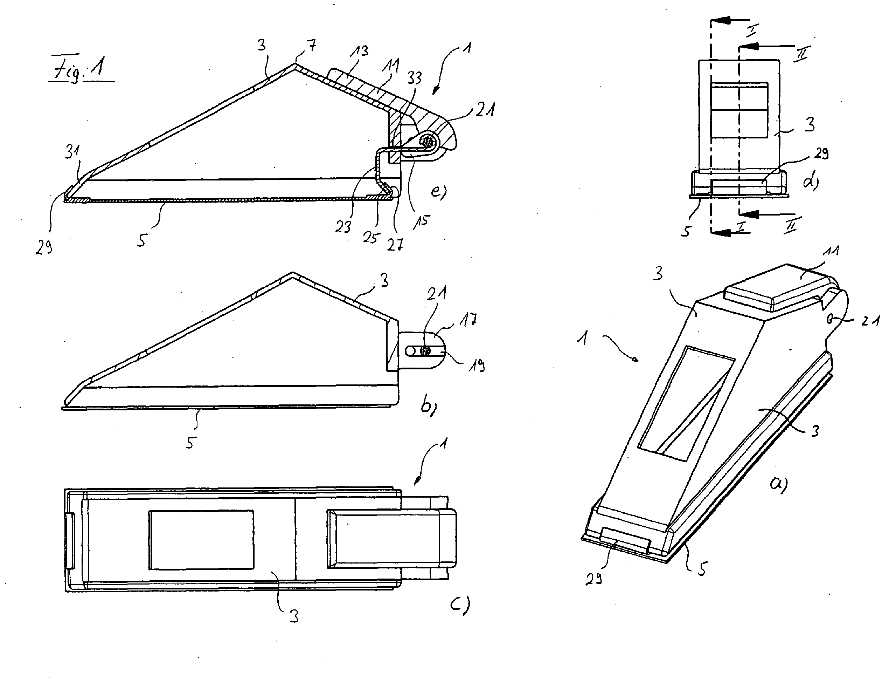

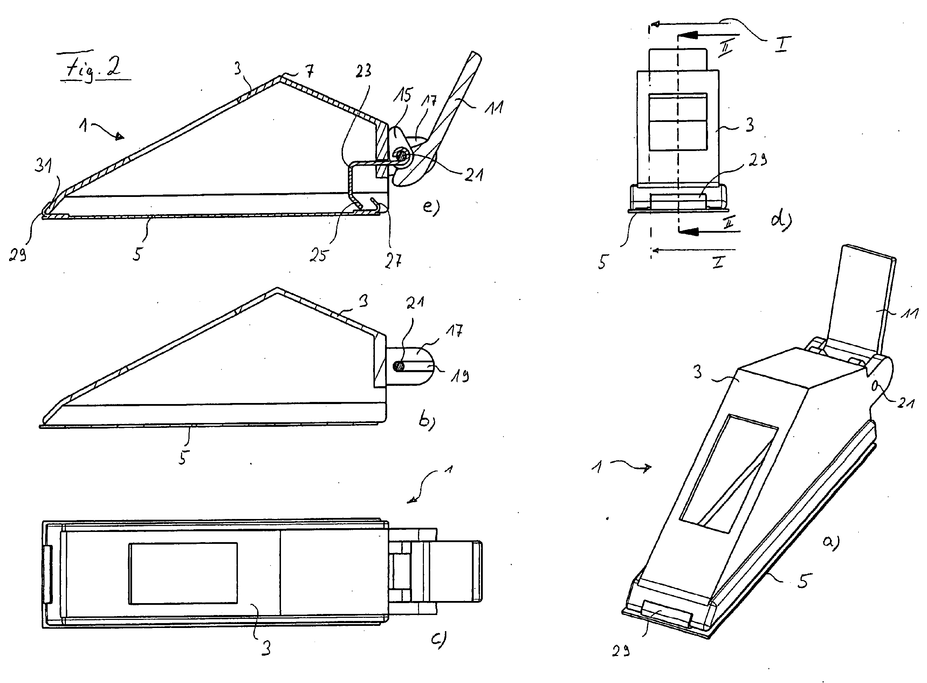

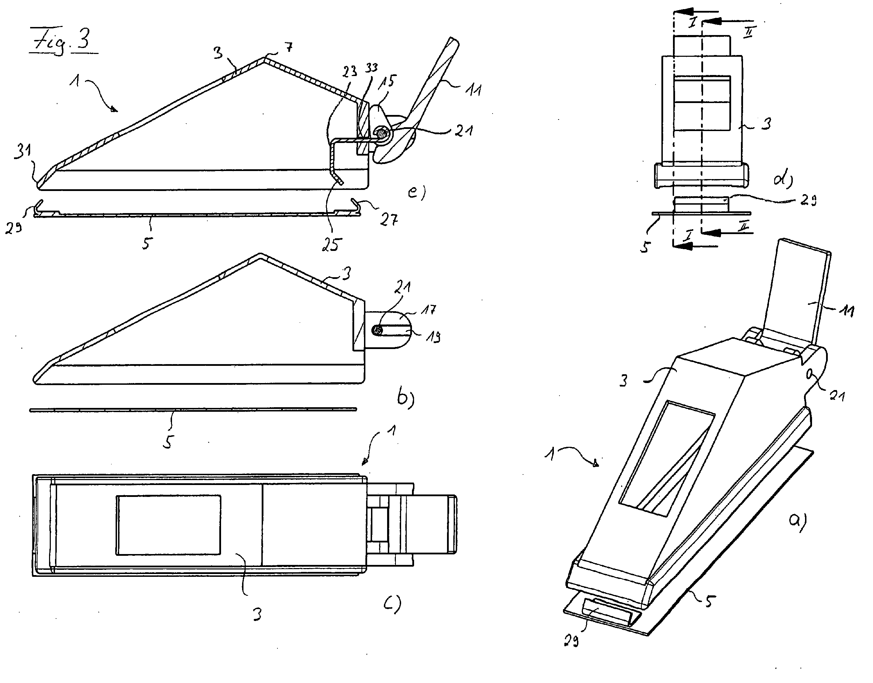

- Figuren 1 bis 3: eine erste Ausführung des spanabhebenden Handwerkzeugs in drei unterschiedlichen Betätigungszuständen, nämlich in einem Spannzustand gemäß Figur 1, einem Lösezustand gemäß Figur 2 und einen Demontagezustand des Spanteils gemäß Figur 3, wobei
die Figur mit dem Kürzel a) eine perspektivische Ansicht des Handwerkzeugs ist;
die Figur mit dem Kürzel b) eine Querschnittsansicht des Handwerkzeugs entlang der Schnittlinie I-I gemäß Figur mit dem Kürzel d) ist;
die Figur mit dem Kürzel c) eine Draufsicht des Handwerkzeugs ist;
die Figur mit dem Kürzel d) eine Frontansicht des Handwerkzeugs ist; und
die Figur mit dem Kürzel e) eine Querschnittsansicht entlang der Schnittlinie II-II gemäß der Figur mit dem Kürzel d) ist;
- Figuren 4 bis 6: ein spanabhebendes Handwerkzeug, welches nicht zur Erfindung gehört, in drei unterschiedlichen Betätigungszuständen, nämlich in dem Spannzustand gemäß Figur 4, dem Lösezustand gemäß Figur 5 und dem Demontagezustand des Spanteils gemäß Figur 6, wobei
die Figur mit dem Kürzel a) eine perspektivische Ansicht des Handwerkzeugs ist;
die Figur mit dem Kürzel b) eine Querschnittsansicht des Handwerkzeugs entlang der Schnittlinie II-II gemäß der Figur mit dem Kürzel d) ist;
die Figur mit dem Kürzel c) eine Draufsicht des Handwerkzeugs ist;
die Figur mit dem Kürzel d) eine Frontansicht des Handwerkzeugs ist; und
die Figur mit dem Kürzel e) eine Querschnittsansicht entlang der Schnittlinie I-I gemäß der Figur mit dem Kürzel d) ist; und

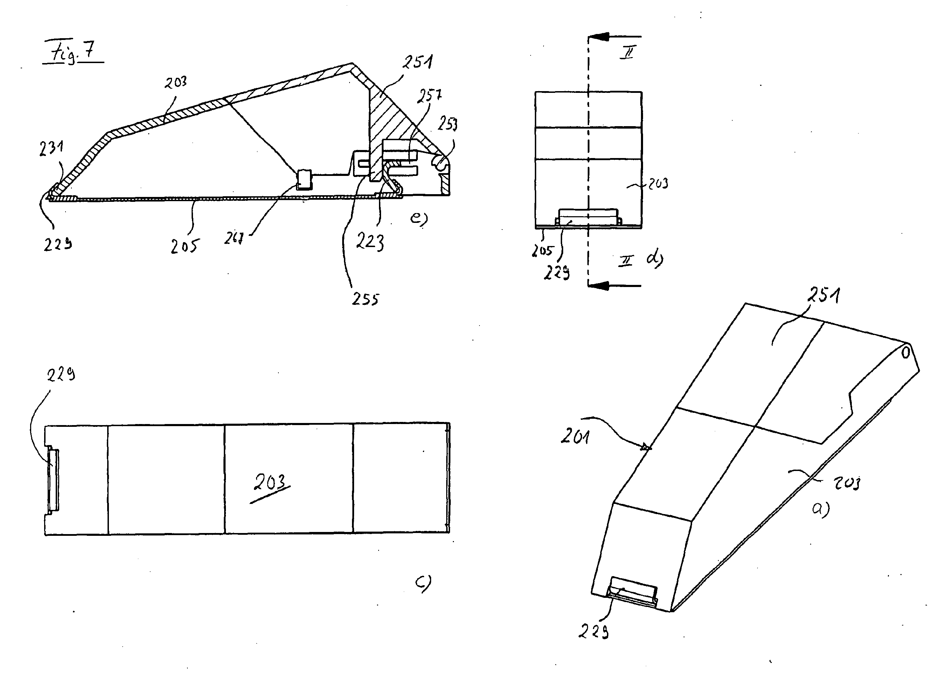

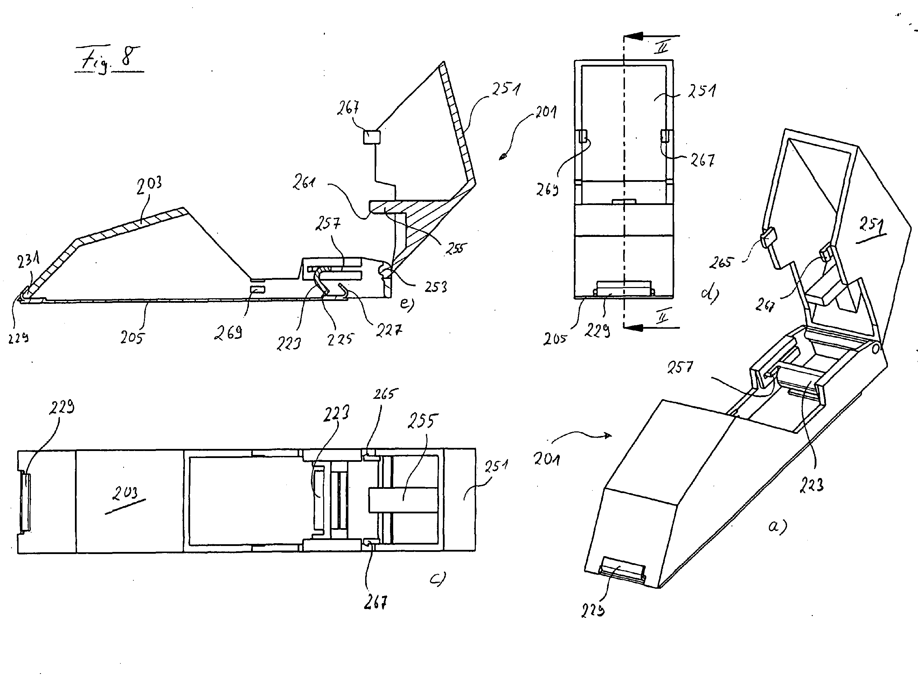

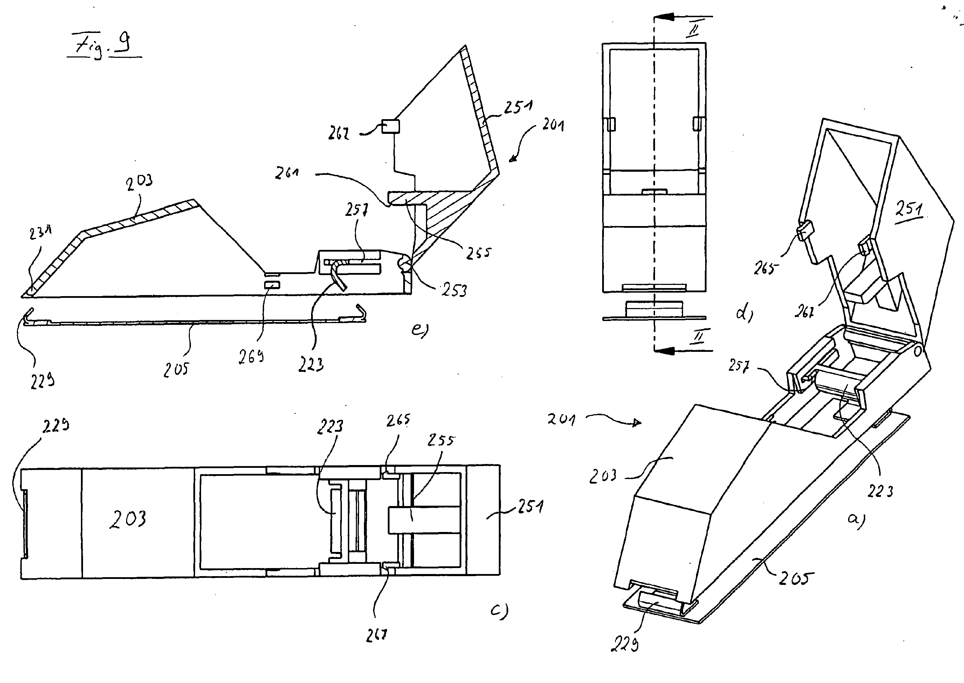

- Figuren 7 bis 9: eine zweite Ausführung des spanabhebenden Handwerkzeugs in den drei unterschiedlichen Betätigungszuständen, nämlich in dem Spannzustand gemäß Figur 7, dem Lösezustand gemäß Figur 8 und den Demontagezustand des Spanteils gemäß Figur 9, wobei
die Figur mit dem Kürzel a) eine perspektivische Ansicht des Handwerkzeugs ist;
die Figur mit dem Kürzel c) eine Draufsicht des Handwerkzeugs ist;
die Figur mit dem Kürzel d) eine Frontansicht des Handwerkzeugs ist;
die Figur mit dem Kürzel e) eine Querschnittsansicht entlang der Schnittlinie II-II gemäß der Figur mit dem Kürzel d) ist.

In den Figuren 1, 2 und 3 ist das erfindungsgemäße spanabhebende Handwerkzeug der ersten Ausführung mit der Bezugsziffer 1 versehen, das einen als Hohlteil ausgebildeten Träger 3, ein an dem Träger 3 befestigbares und unter Zugvorspannung gesetztes Spanteil, das als Feilblatt 5 ausgebildet ist, und einen Mechanismus zum Vorspannen des Feilblatts 5 umfaßt.

Der Träger 3 hat im Querschnitt einen dachartigen Aufbau mit einer Spitze 7, von der sich zwei geneigte, flache Dachflanken in einem Winkel zum horizontal ausgerichteten Feilblatt 5 nach unten erstrecken. Der Träger 3 überdeckt vollständig das Feilblatt 5

Der Vorspannmechanismus umfaßt einen Betätigungsarm 11, der einen Betätigungshebel 13 und eine Nocke 15 aufweist, die mit dem Betätigungshebel 13 fest verbunden ist.

Der Betätigungsarm 11 ist schwenkbar an dem Träger 3 gelagert, indem in einer mit dem Träger 3 fest verbundenen, starren Außenlasche 17 ein Langloch 19 ausgebildet ist, längs dessen ein Schwenklagerzapfen 21 des Betätigungsarms 11 gleiten kann.

Des weiteren umfaßt der Vorspannmechanismus einen hakenförmigen, starr elastischen Greifer 23, der an seinem einen Ende mit dem Schwenklagerzapfen 21 verdrehbar gekoppelt ist und an dem anderen Ende einen Mitnehmerhaken 25 aufweist, der mit einem an dem Feilblatt 5 vorgesehenen Gegenhaken 27 in Eingriff kommen kann.

Das Feilblatt 5 hat an deren von dem Vorspanmechanismus abgewandten Ende einen weiteren Gegenhaken 29, der im Eingriff mit einem unteren Randabschnitt 31 einer Dachflanke des Trägers 3 steht.

Bezugnehmend auf die Figuren 1 bis 3 wird beim Montieren des Feilblatts zuerst der Gegenhaken 29 in Eingriff mit dem Randabschnitt 31 gebracht, wie in Figur 2 gezeigt ist. Bei diesem Vormontageschritt ist der Betätigungshebel 11 noch in dessen Lösezustand, wie in den Figuren 2 und 3 gezeigt ist. In dem Lösezustand steht der Betätigungshebel 11 zu der benachbarten Dachflanke des Trägers 3 in einem Winkel von etwa 90°.

Beim Betätigen, nämlich Schwenken des Betätigungshebels 11 auf die benachbarte Dachflanke des Trägers 3 hin, wird auch die Nocke 15 mitgeschwenkt, die sich dabei an dem Träger 3 außenseitig abstützt und eine Verlagerung des Lagerzapfens 21, des Betätigungshebels 13 und des Greifers 23 relativ zum Träger 3 und zum Feilblatt 5 zuläßt, bis der Mitnehmerhaken 25 des Greifers 23 in den vorspannenden Eingriff mit dem Gegenhaken 27 des Feilblatts 5 gelangt.

Bei der in den Figuren 1 bis 3 dargestellten Ausführung wird der Greifer 23 in einer rein translatorischen Bewegung nach außen gedrückt, wobei sich der Greifer 23 durch einen Durchgang 33 des Trägers 3 hindurch erstreckt.

Im Spannzustand liegt der Betätigungshebel 13 parallel zur Dachflanke auf dem Träger 3, wobei die Nocke 15 über eine maximale Axialverlagerungsamplitude hinaus verschwenkt ist, so daß ein selbständiges Öffnen des Betätigungshebels 13 vermieden ist. Konkret bedeutet dies, daß in dem Lösezustand des Betätigungsarms 13 die Nocke 15 in einer 11-Uhr-Stellung ist, wobei im Spannzustand die Nocke 15 bei etwa 8-Uhr liegt.

Mit dem erfindungsgemäßen Vorspannmechanismus ist es nunmehr einfach möglich, durch einfaches Umlegen des Betätigungshebels das Feilblatt 5 vorzuspannen, wobei lediglich ein Betätigungsschwenkwinkel für den Betätigungsarm von etwa 90° notwendig ist.

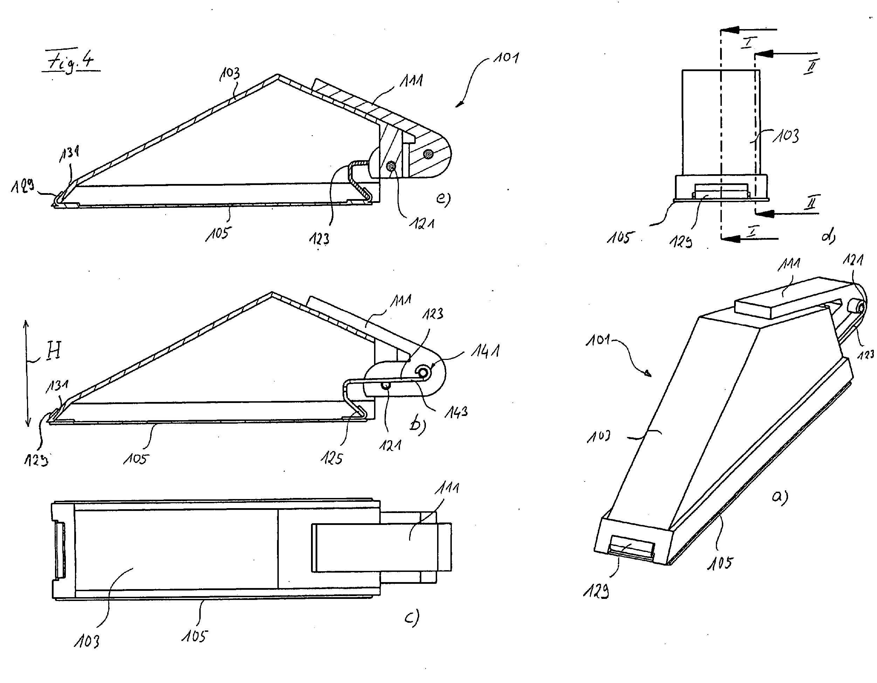

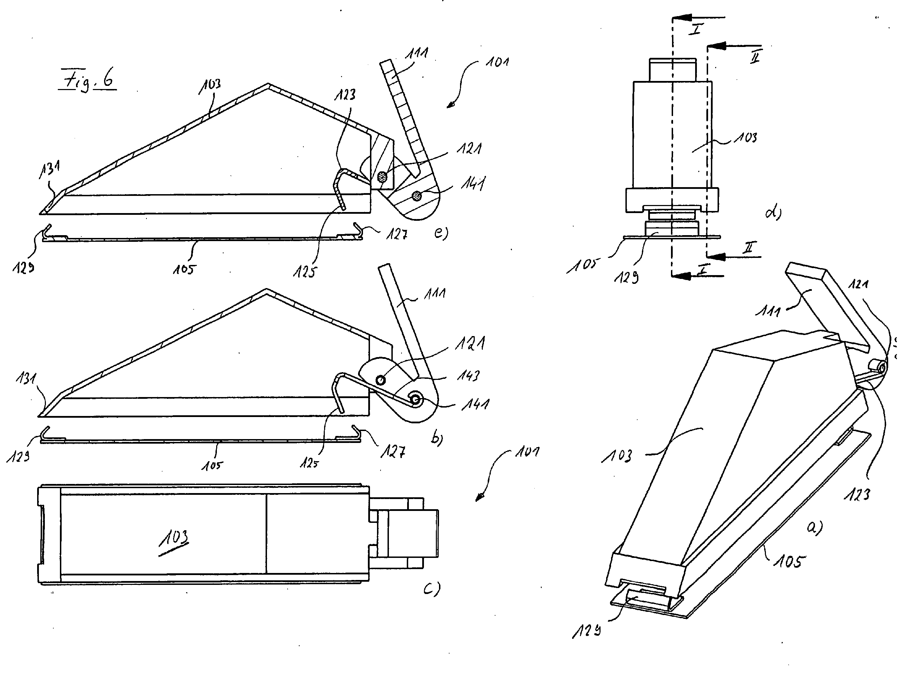

In den Figuren 4 bis 6 ist eine Ausführung eines spanabhebenden Handwerkzeugs mit der Bezugsziffer 101 versehen. Zur besseren Lesbarkeit der Figurenbeschreibung werden für die identischen oder ähnlichen Bauteile gemäß der Ausführung nach den Figuren 1 bis 3 die gleichen Bezugszeichen verwendet, die um 100 erhöht sind.

Das spanabhebende Handwerkzeug 101 gemäß den Figuren 4 bis 6 unterscheidet sich von dem gemäß den Figuren 1 bis 3 hauptsächlich in dem Vorspannmechanismus.

Der Vorspannmechanismus umfaßt einen Betätigungsarm 111, der um einen ortsfesten Lagerzapfen 121 verschwenkbar ist, der drehbar am Träger 103 gelagert ist. Wie insbesondere in Figur 4d, 5d, 6d ersichtlich ist, ist der hakenförmige, steife und elastisch verformbare Greifer 123 mit dem Betätigungsarm 111 über ein Scharniergelenk 141 verbunden, das exzentrisch zur Schwenkachse des Schwenklagerzapfens 121 angeordnet ist.

Im Spannzustand befindet sich das Scharniergelenk 141 bezüglich einer Höhenrichtung H, die senkrecht zum montierten Feilblatt 105 steht, oberhalb des Schwenklagerzapfens 121.

Der Greifer 123 verbindet das Scharniergelenk 141 mit dem Mitnehmerhaken 125 des Feilblatts 105 über eine geradlinige Strebe 143. Die geradlinige Strebe 143 liegt im Spannzustand ebenfalls oberhalb der Schwenkachse des Schwenklagerzapfens 121. Durch die Anordnung des Scharniergelenkes 141 in Höhenrichtung H oberhalb der Schwenkachse des Lagerzapfens 121 - das gleiche gilt für die Verbindungsstrebe 123 - ist gewährleistet, daß sich der Betätigungshebel 111 nicht selbsttätig aus dem Spanzustand entfernt, in dem der Spanhebel an der Dachflanke des Träger 103 anliegt.

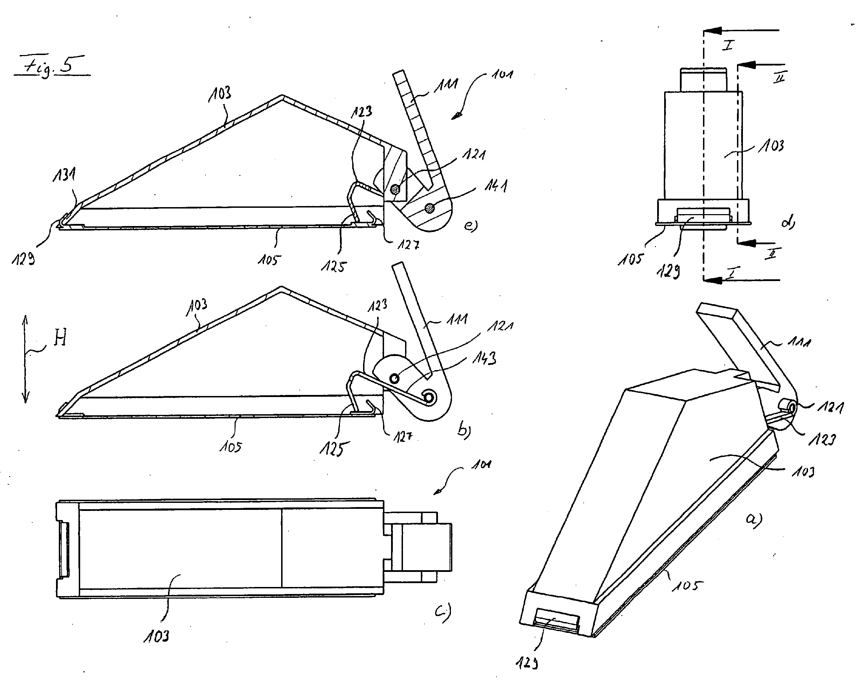

Wie insbesondere in Figur 5b ersichtlich ist, kreuzt der geradlinige Abschnitt der Verbindungsstrebe 143 beim Öffnen des Betätigungsarms 111 die Schwenkachse des Schwenklagerzapfens 121, wobei ein leichter Widerstand bei Passieren der Schwenkachse überwunden werden muß.

In dem Lösezustand kann anschließend das Feilblatt 105 ohne weiteres entfernt werden, indem der Gegenhaken 129 von dem Randabschnitt 131 des Trägers 103 abgenommen wird.

Durch das Kreuzen der Verbindungsstrebe 143 an der Schwenkachse des Schwenklagerzapfens 121 vorbei wird ein Schnappen in den Spanzustand für den Betätigungshebel erzeugt, weil diese Bewegung eine elastische Verformung des Greifers 123 bedingt.

Mit dem Spanmechanismus ist es möglich, mit einer Betätigungsschwenkbewegung von weniger als 45° sowohl ein Halten des Feilblatts zu gewährleisten als auch eine Zugvorspannung der Feilplatte 105 zu erzeugen.

In den Figuren 7 bis 9 ist eine zweite bevorzugte Ausführung des spanabhebenden Handwerkzeugs mit der Bezugsziffer 201 versehen. Dabei werden für identische und ähnliche Bauteile gegenüber den oben beschriebenen Ausführungen gemäß den Figuren 1 bis 3 bzw. 4 bis 6 die gleichen Bezugsziffern verwendet, die um 200 bzw. 100 erhöht sind.

Das erfindungemäße spanabhebende Spanhandwerkzeug 201 gemäß den Figuren 7 bis 9 unterscheidet sich von der oben genannten ebenfalls in der Realisierung des Vorspannmechanismus. Im Gegensatz zu den oben genannten Ausführungen ist der Betätigungsarm 211 nicht als zusätzlich separates Bauteil vorgesehen, sondern durch einen Teil 251 des Trägers realisiert, das an dem Träger 203, nämlich an dessen ortsfesten Basis, schwenkbar angelenkt ist. Dabei ist ein Schwenkscharniergelenk 253 vorgesehen.

An der Innenseite des Trägerteils 251 ist eine langgestreckte Zunge 255 ausgebildet, die in einen Kontakteingriff mit einem sichelförmigen Greifer 223 kommen kann.

Der Greifer 223 ist rein translatorisch am Träger 203 geführt. Hierzu ist eine Führungsnut 257 an dem Träger beidseitig ausgebildet. In die Führungsnut 257 greift schlittenartig ein Randabschnitt des Greifers 223, wodurch der Greifer 223 eine translatorische Bewegung relativ zum Träger 203 und parallel zum Feilblatt 205 durchführt.

Beim Schließen des Trägerteils 251 kommt die Zunge 255 über eine dem Greifer 223 zugewandte, angeschrägte Seite 261 mit der gekrümmten Außenseite des Greifers 223 in Kontakt. Aufgrund der Schwenkbewegung der Zunge 255 in Kooperation mit der gekrümmten Außenseite des Greifers 223 wird der Greifer 223 translatorisch zum Feilblatt 205 nach außen gedrängt, wobei der Mitnehmerhaken 225 in Eingriff mit dem Gegenhaken 227 des Feilblatts 205 kommt.

Der Abstand der Zunge 255 von der Schwenkachse des Scharniergelenks 253 ist derart bemessen, daß im Spannzustand, also bei geschlossenem Trägerteil 251, wie in Figur 7 gezeigt ist, der Greifer 223 eine Zugvorspannkraft auf das Feilblatt 205 ausüben kann. Damit das Trägerteil 251 in der in Figur 7 gezeigten geschlossenen Stellung verbleibt, ist eine Rastmechanismus mit zwei Rasthaken 265, 276 vorgesehen, die im geschlossenen Zustand in Aussparungen 269 am Träger 203 verrastend greifen können.

Auch mit dieser Ausführung ist es möglich, bei einer Schwenkbewegung von etwa 90° sowohl das Greifen des Spanblatts als auch das Verspannen zu realisieren.

### Bezugszeichenliste

- 1, 101, 201: spanabhebendes Handwerkzeug
- 3, 103, 203: Träger
- 5: Spanblatt
- 5, 105, 205: Feilblatt
- 7: Spitze
- 11, 111: Betätigungsarm
- 13, 113: Betätigungshebel
- 15: Nocke
- 17: Außenlasche
- 19: Langloch
- 21, 121: Schwenklagerzapfen
- 23, 123, 223: Greifer
- 25, 125: Mitnehmerhaken
- 27, 29, 127, 129, 227, 229: Gegenhaken
- 31: Randabschnitt
- 33: Durchgang
- 141: Scharniergelenk
- 143: geradlinige Strebe
- 251: Trägerteil
- 253: Schwenkscharniergelenk
- 255: Zunge
- 257: Führungsgut
- 261: angeschrägte Seite
- 265, 276: Rasthaken
- 269: Aussparungen
- H: Höhenrichtung

## Patentansprüche

1. Spanabhebendes Handwerkzeug mit einem zum manuellen Betätigen des Handwerkzeugs (1, 201) greifbaren Träger (3, 203), einem an dem Träger (3, 203) abnehmbar gehaltenen Spanteil, wie einem Feilblatt (5, 205) oder einer Hobelplatte, und einem Mechanismus zum Einspannen des Spanteils an dem Träger (3, 203), welcher Mechanismus einen relativ zum Träger (3, 130, 203) beweglichen Greifer (23, 223), der das Spanteil in einem Lösezustand freigibt und in einem Spannzustand eine Zugvorspannkraft mitteilt, und einen mit dem Greifer (23, 223) zumindest in dem Spannzustand gekoppelten Spannungserzeuger umfaßt, wobei der Mechanismus gewindefrei ist und der Spannungserzeuger einen schwenkbaren Betätigungsarm (11, 211) aufweist, der bei einer Betätigungsschwenkbewegung von weniger als 360° mit dem Spanteil in Eingriff kommt und es mitnehmend in den Spannzustand versetzt, wobei der Greifer (23, 223) bezüglich des Betätigungsarms (11, 211) strukturell eigenständig ist, **dadurch gekennzeichnet, daß** der Greifer (23, 223) zum Ausführen einer rein translatorischen Greifbewegung von dem Lösezustand in den Spannungszustand an dem Träger (3, 203) gelagert ist.

2. Handwerkzeug nach Anspruch 1, **dadurch gekennzeichnet, daß** die Betätigungsschwenkbewegung kleiner als 270°, vorzugsweise kleiner als 180°, vorzugsweise kleiner als 90°, vorzugsweise kleiner als 60°, vorzugsweise kleiner 30°, ist.

3. Handwerkzeug nach einem der Ansprüche 1 bis 2, **dadurch gekennzeichnet, daß** der Greifer (23) an einem Schwenklagerzapfen (21) des Betätigungsarms (11) gekoppelt ist, welcher Schwenklagerzapfen (21) an dem Träger (3) verschieblich, insbesondere translatorisch bewegbar, gelagert ist.

4. Handwerkzeug nach einem der Ansprüche 1 bis 3, **dadurch gekennzeichnet, daß** der Betätigungsarm mit einer Nocke (15) fest verbunden ist, die bei der Betätigungsschwenkbewegung derart mit dem Träger (3) in Eingriff kommt, daß der Schwenklagerzapfen (21) und der Greifer (23) zum Greifen und Spannen des Spanteils relativ zum Träger (3) verlagert werden.

5. Handwerkzeug nach Anspruch 4, **dadurch gekennzeichnet, daß** der Betätigungsarm (11) und die Nocke (15) an einer Außenseite des Trägers (3) angeordnet sind, in der insbesondere ein Durchgang ausgebildet ist, durch den sich der Greifer (23) erstreckt.

6. Handwerkzeug nach einem der Ansprüche 1 bis 5, **dadurch gekennzeichnet, daß** der Greifer (223) von dem Betätigungsarm zumindest in dem Lösezustand entkoppelt ist.

7. Handwerkzeug nach Anspruch 6, **dadurch gekennzeichnet, daß** der Betätigungsarm bei dessen Betätigungsschwenkbewegung in den Spannzustand mit dem Greifer (223) in einem Kontakteingriff kommt, um den Greifer (223) für den Eingriff mit dem Spanteil zu verdrängen.

8. Handwerkzeug nach einem der Ansprüche 1 bis 7, **dadurch gekennzeichnet, daß** der Träger (203) eine Basis, die ein von dem gewindefreien Spannmechanismus fernes Ende des Spanteils hält, wobei der Betätigungsarm (211) durch ein Trägerteil (251) gebildet ist, das an der Basis angelenkt ist.

9. Handwerkzeug nach einem der Ansprüche 6 bis 8, **dadurch gekennzeichnet, daß** der Greifer (223) eine gekrümmte Außenfläche aufweist, welche eine Verdrängbewegung des Greifers (223) bei Kontakteingriff des Betätigungsarms definiert.

10. Handwerkzeug nach einem der Ansprüche 6 bis 9, **dadurch gekennzeichnet, daß** das Trägerteil (251) eine Eingriffszunge aufweist, deren Position relativ zu einer Schwenkachse des Trägerteils (251) derart festgelegt ist, daß bei der Betätigungsschwenkbewegung in den Spannzustand die Eingriffszunge den Greifer (223) berührt und definiert hin zum Spanteil verlagert, so daß er mit dem Spanteil in Eingriff kommt und letzteren spannt.

11. Handwerkzeug nach Anspruch 10, **dadurch gekennzeichnet, daß** die Eingriffszunge auf deren dem Greifer (223) zugewandten Seite angeschrägt ist.

12. Handwerkzeug nach einem der Ansprüche 10 bis 11, **dadurch gekennzeichnet, daß** das Trägerteil (251) eine Arretiereinrichtung aufweist, die das Trägerteil (251) im Spannzustand an der Basis festhält.

13. Handwerkzeug nach einem der Ansprüche 1 bis 12, **dadurch gekennzeichnet, daß** der Greifer (23, 223) mit einem Mitnehmerhaken (25, 225) versehen ist, der mit einem dazu insbesondere formkomplemetären Gegenhaken (27, 29, 227, 229) am Spanteil in einen lösbaren mitnehmenden Eingriff bringbar ist.

## Claims

1. Chip removing hand tool with a seizable holder (3, 203) for manually operating the hand tool (1, 201), a chipping portion such as a file blade (5, 205) or a planing plate, removably held at the holder (3, 203), and a mechanism for clamping the chipping portion to the holder (3, 203) which mechanism comprises a gripper (23, 223), movable relative to the holder (3, 130, 203) and releasing the chipping portion in a state of release and transmitting a tensile preload to the chipping portion in a state of tension, and a tension generator, being coupled with the gripper (23, 223) at least in the state of tension, wherein the mechanism is void of threaded parts and the tension generator comprises a pivotable actuating arm (11, 211) which engages with the chipping portion in an actuating pivoting movement of less than 360° and entrainingly sets it into the state of tension, wherein the gripper (23, 223) is structurally independent with respect to the actuating arm (11, 211), **characterised in that** the gripper (23, 223) is mounted at the holder (3, 203) to perform a purely translational gripping movement from the state of release to the state of tension.

2. Hand tool as in claim 1, **characterised in that** the actuating pivoting movement is smaller than 270°, preferably less than 180°, preferably less than 90°, preferably less than 60°, preferably less than 30°.

3. Hand tool as in one of the claims 1 or 2, **characterised in that** the gripper (23) is coupled to a pivot bearing peg (21) of the actuating arm (11), the pivot bearing peg (21) being mounted at the holder (3) in a displaceable, in particular translationally movable manner.

4. Hand tool as in one of the claims 1 to 3, **characterised in that** the actuating arm is tightly connected to a cam (15) which upon the actuating pivoting movement engages with the holder (3) such that the pivot bearing peg (21) and the gripper (23) are displaced relative to the holder (3) for gripping and tensioning the chipping portion.

5. Hand tool as in claim 4, **characterised in that** the actuating arm (11) and the cam (15) are arranged at an outside of the holder (3) in which in particular is formed a passage through which the gripper (23) extends.

6. Hand tool as in one of the claims 1 to 5, **characterised in that** the gripper (223) is decoupled from the actuating arm at least in the state of release.

7. Hand tool as in claim 6, **characterised in that** during its actuating pivoting movement into the state of tension the actuating arm comes into contact engagement with the gripper (223) in order to displace the gripper (223) for engaging with the chipping portion.

8. Hand tool as in on of the claims 1 to 7, **characterised in that** the holder (203) has a base holding an end of the chipping portion far from the tensioning mechanism void of threaded parts, wherein the actuating arm (221) is formed by a holder portion (251) that is hinged to the base.

9. Hand tool as in one of the claims 6 to 8, **characterised in that** the gripper (223) features a curved outer surface defining a displacing movement of the gripper (223) during contact engagement of the actuating arm.

10. Hand tool as in one of the claims 6 to 9, **characterised in that** the holder portion (251) has an engagement tongue the position of which relative to a pivoting axis of the holder portion (251) is defined such that during the actuating pivoting movement into the state of tension the engagement tongue touches the gripper (223) and displaces it in a defined way towards the chipping portion so that it engages with the chipping portion and tensions the latter.

11. Hand tool as in claim 10, **characterised in that** the engagement tongue is bevelled at its side facing the gripper (223).

12. Hand tool as in one of the claims 10 to 11, **characterised in that** the holder portion (251) has an arresting means that, in the state of tension, holds the holder portion (251) at the base.

13. Hand tool as in one of the claims 1 to 12, **characterised in that** the gripper (23, 223) is provided with an entrainment hook (25, 225) which can be brought into a detachable entraining engagement with a counter hook (27, 29, 227, 229) being in particular complementary in its shape for this purpose and located at the chipping portion.

## Revendications

1. Outil manuel d'usinage par enlèvement de matière comprenant un support (3, 203) pouvant être saisi pour l'actionnement manuel de l'outil manuel (1, 201), une partie d'enlèvement maintenue sur le support (3, 203) et pouvant en être séparée, comme une lime plate à main (5, 205) ou un sabot fixe, et un mécanisme de serrage de la partie d'enlèvement sur le support (3, 203), lequel mécanisme comprend un crochet (23, 223) mobile par rapport au support (3, 130, 203) qui libère la partie d'enlèvement dans un état desserré et communique une force de précontrainte par traction dans un état serré, et comprend un générateur de serrage couplé au crochet (23, 223) au moins dans l'état serré, sachant que le mécanisme est sans filetage et que le générateur de serrage comprend un bras d'actionnement pivotant (11, 221) qui lors d'un pivotement d'actionnement inférieur à 360° se met en prise avec la partie d'enlèvement et la met dans l'état serré en l'entraînant, sachant que le crochet (23, 223) est autonome structurellement par rapport au bras d'actionnement (11, 211), **caractérisé en ce que** le crochet (23, 223) est positionné sur le support (3, 203) pour effectuer un mouvement de prise purement translationnel de l'état desserré à l'état serré.

2. Outil manuel selon la revendication 1, **caractérisé en ce que** le pivotement d'actionnement est inférieur à 270°, de préférence inférieur à 180°, de préférence inférieur à 90°, de préférence inférieur à 60°, de préférence inférieur à 30°.

3. Outil manuel selon l'une des revendications 1 à 2, **caractérisé en ce que** le support (23) est couplé à un tenon (21) du bras d'actionnement (11), lequel tenon (21) est positionné sur le support (3) de manière à pouvoir être glissé, en particulier à pouvoir être déplacé de manière translationnelle.

4. Outil manuel selon l'une des revendications 1 à 3, **caractérisé en ce que** le bras d'actionnement est relié fixement à une came (15) qui lors du pivotement d'actionnement vient en prise avec le support (3) de telle manière que le tenon (21) et le support (23) sont positionnés pour saisir et serrer la partie d'enlèvement par rapport au support (3).

5. Outil manuel selon la revendication 4, **caractérisé en ce que** le bras d'actionnement (11) et la came (15) sont placés sur un côté extérieur du support (3) dans lequel un passage est particulièrement formé à travers lequel le support (23) passe.

6. Outil manuel selon l'une des revendications 1 à 5, **caractérisé en ce que** le support (223) est découplé du bras d'actionnement au moins en position desserrée.

7. Outil manuel selon la revendication 6, **caractérisé en ce que** le bras d'actionnement, lors de son pivotement d'actionnement dans l'état serré vient en prise par contact avec le support (223) pour déplacer le support (223) pour la prise avec la partie d'enlèvement.

8. Outil manuel selon l'une des revendications 1 à 7, **caractérisé en ce que** le support (203) présente une base qui tient une extrémité de la partie d'enlèvement éloignée du mécanisme de serrage sans filetage, sachant que le bras d'actionnement (211) est formé par une partie porteuse (251) articulée sur la base.

9. Outil manuel selon l'une des revendications 6 à 8, **caractérisé en ce que** le support (223) présente une face extérieure cintrée qui définit un mouvement de déplacement du support (223) lors de la mise en prise par contact du bras d'actionnement.

10. Outil manuel selon l'une des revendications 6 à 9, **caractérisé en ce que** la partie porteuse (251) présente une languette de prise dont la position par rapport à un axe de pivotement de la partie porteuse (251) est définie de telle manière que lors du mouvement d'actionnement dans l'état serré, la languette de prise touche le support (223) et le déplace de manière bien définie en direction de la partie d'enlèvement, de façon à ce qu'il vienne en prise avec la partie d'enlèvement et serre cette dernière.

11. Outil manuel selon la revendication 10, **caractérisé en ce que** la languette de prise est biseautée sur son côté tourné contre le support (223).

12. Outil manuel selon l'une des revendications 10 à 11, **caractérisé en ce que** la partie porteuse (251) présente un dispositif d'arrêt qui maintient la partie porteuse (251) dans l'état serré sur la base.

13. Outil manuel selon l'une des revendications 1 à 12, **caractérisé en ce que** le support (23, 223) est muni d'un crochet d'entraînement (25, 225) qui peut être amené en prise entraînante séparable sur la partie d'enlèvement avec un contre-crochet (27, 29, 227, 229) de forme particulièrement complémentaire à celui-ci.
